# EUROPÄISCHE PATENTSCHRIFT

(11) **EP 2 072 567 B1**
(45) Veröffentlichungstag und Bekanntmachung des Hinweises auf die Patenterteilung: **24.02.2016**
(21) Anmeldenummer: 08172186.2
(22) Anmeldetag: 18.12.2008
(51) Int. Cl.: C08K 3/26, C08L 27/06, C01F 5/24, C01F 11/18

(54) **Zusammensetzung zur Stabilisierung halogenhaltiger Polymere, Verfahren zu ihrer Herstellung und Verwendung**
Compound for stabilising polymers containing halogens, method for manufacture and use
Composition destinée à la stabilisation de polymères contenant de l'halogène, son procédé de fabrication et d'utilisation

(30) Priorität: 18.12.2007 DE 102007061660; 18.12.2008 DE 102008063531
(43) Veröffentlichungstag der Anmeldung: 24.06.2009
(73) Patentinhaber: bene_fit Systems GmbH & Co. KG, 92242 Hirschau (DE)
(72) Erfinder: Kräuter, Reinhard, 92237 Sulzbach-Rosenberg (DE)
(74) Vertreter: Hannke, Christian

(56) Entgegenhaltungen:
- EP-A- 0 945 483
- EP-A1- 1 661 460
- EP-A1- 2 180 095
- DE-A1- 3 542 719
- US-A1- 2006 188 428
- DATABASE WPI Week 200401 Thomson Scientific, London, GB; AN 2004-002290 XP002521989 & JP 2003 253070 A (GH RITSUMEIKAN) 10. September 2003 (2003-09-10)

## Beschreibung

Die vorliegende Erfindung betrifft die Verwendung einer Stabilisatorzusammensetzung, die frei von Schwermetallen ist, bestehend aus mindestens einer natürlich vorkommenden Erdalkaliverbindung, die als Calcium-Magnesium-Mischverbindung vorliegt, zur Stabilisierung halogenhaltiger Polymere, wobei die Erdalkaliverbindung eine kalzinierte Erdalkalicarbonatverbindung mit mehr als 50,0 Ma.-% CaO bezogen auf den Ca-Anteil der Calcium-Magnesium-Mischverbindung ist, wobei die Erdalkaliverbindung jeweils mit weniger als 50,0 Ma.-% CaMg(CO₃)₂ in Form submikronskaliger Primärpartikel mit einer Partikelgröße, gemessen als d₅₀ mittels Laserbeugung oder REM oder TEM, die zumindest in einer Dimension 0,1 - 0,3 µm beträgt, vorliegt.

Alternativ zu der hier genannten natürlichen Ca-Mg-CO₃-Mischverbindung, Dolomit als Quelle für die nachfolgenden Zusammensetzungen können auch alle anderen natürlich vorkommenden oder synthetischen Mischverbindungen dieser oder verwandter Art als Basis für die nachfolgend genannten Erfindungsgegenstände herangezogen werden. Ein Beispiel hierfür ist Huntit, ebenfalls eine Ca-Mg-CO₃-Mischverbindung und ebenfalls natürlichen Ursprungs. Daneben können selbstverständlich auch alle Mischungen der hier vorgeschlagenen oder verwandter Verbindungen als Ca-Mg-Mischverbindung und deren Folgeprodukte mit allen anderen geeigneten Ca- oder Mg- oder sonstigen Verbindungen vermischt werden, um eine Modifizierung der Funktionalität zu erzeugen, was schließlich zu einem ähnlichen Ergebnis in der Funktion, gegebenenfalls zu einer Verstärkung, Milderung oder Verzögerung der gewünschten Eigenschaften führt. Schließlich können die hier vorgeschlagenen Verbindungen oder Abwandlungen davon zusammen mit anderen Materialien z.B. aus der ersten bis sechsten Hauptgruppe des Periodensystems, beispielsweise mit Li, Na, K, Al, Sr, Ba, B, Si, P, O, zu neuen Materialien umgesetzt werden, die ebenfalls für die hier vorgeschlagenen Verwendungen oder auch andere eingesetzt werden können.

Für die Stabilisierung von Polymeren werden in der Regel Additive, z.T. auch Füllstoffe eingesetzt. PVC wird beispielsweise nicht alleine verarbeitet, sondern in der Regel im Gemisch mit Zusatzstoffen. Die wichtigsten Additive für PVC sind Stoffe zur Verbesserung physikalischer Eigenschaften wie Temperatur-, Licht- und Wetterbeständigkeit, Zähigkeit, Elastizität und Transparenz. Daneben werden Stoffe zur Verbesserung, der Verarbeitbarkeit und Farbpigmente zugesetzt. All diese Stoffe sind im PVC-Fertigprodukt fest eingebunden und praktisch nicht bioverfügbar.

An die heute verwendeten PVC-Additive werden hohe Anforderungen gestellt. Sie müssen in möglichst geringer Konzentration eine hohe Wirkung aufweisen, die durch die unterschiedlichen Herstellungsprozesse für das Kunststoff-Formteil nicht beeinträchtigt werden darf. Sie müssen dem Formteil während dessen Gebrauchsdauer die gewünschten Eigenschaften verleihen und auch aus Konsumentensicht sicher anwendbar sein.

PVC muss vor allem bei der Verarbeitung aber auch bei der Nutzung gegen thermolytischen Abbau, der sich bei ca. 100°C bereits deutlich bemerkbar macht, geschützt werden. Die Abbaureaktionen können durch Additive verzögert oder gestoppt werden. Dabei ist eine Kombination von Thermo- und Lichtstabilisatoren in einem Stoff möglich. Erst diese Additive machen den breiten Einsatz von PVC möglich. Allerdings nehmen sie deutlichen Einfluss auf die Verarbeitungs- und Gebrauchseigenschaften des PVC. Deshalb ist es wichtig, das Stabilisatorsystem auf die jeweilige Verarbeitung und Anwendung anzupassen. Für die Stabilisierung von PVC-Mischungen stehen Organozinn-Stabilisatoren, Blei-Barium-Zink und Calcium-Zink-Stabilisatoren sowie Calcium-organische und andere Stabilisatoren zur Verfügung. Cadmium-basierte Stabilisatoren sind aufgrund einer freiwilligen Selbstverpflichtung der PVC-verarbeitenden Industrie in Europa seit 2001 nicht mehr im Einsatz. Blei-basierte Stabilisatoren sollen bis spätestens 2015 sukzessive durch schwermetallfreie Alternativen ersetzt werden.

Eine nicht ausreichende Stabilisierung von PVC verursacht Zersetzungsprozesse unter Abspaltung von HCl. Die macht sich zum Beispiel bemerkbar beim Verarbeiten durch Kleben des Materials in der heißen Maschine, durch Blasen im Material und letztendlich auch durch Verfärben des Materials

Bei der thermoplastischen Verarbeitung, beispielsweise Temperaturen von 160 bis 200 °C) möglicherweise entstehender Chlorwasserstoff wird durch den Zusatz von Säurefängern gebunden. Mineralische Stoffe wie z. B. Hydrotalcit und Hydrocalumit, Zeolithe und andere organische basische Verbindungen zählen zur Gruppe der Säurefänger.

Beispielsweise beschreibt DE 2004 037 369 A1 ein Stabilisatorsystem für halogenhaltige Polymere. Das Stabilisatorsystem für chlorhaltige Polymere, insbesondere PVC, enthält mindestens ein lineares oder zyklisches Azylureid oder/und einen Polyaminocrotonester und einen Polyepoxypropylalkoholether oder/und ein Cyanamid(derivat).

Auch die Gebrauchsmusterschrift DE 201 21 356 U1 beschreibt ein Stabilisatorsystem zur Stabilisierung halogenhaltiger Polymere. Darin ist eine Zusammensetzung, enthaltend ein chlorhaltiges Polymer und eine Stabilisatormischung beschrieben, die mindestens ein Perchloratsalz und ein Alkanolamin umfasst, wobei die Zusammensetzung keinen Ba-Zn-Stabilisator enthält.

Die Offenlegungsschrift DE 196 44 128 A1 beschreibt eine Stabilisatorkombination für Kabelummantelungen durch die Verwendung einer Formmasse, enthaltend halogenhaltige Polymere, insbesondere Polyvinylchlorid, und eine spezielle Stabilisatorkombination für Kabelummantelungen. Durch die Stabilisatorkombination, die mindestens ein gegebenenfalls oberflächenmodifiziertes Hydrotalcit, mindestens ein basisches Calcium-Aluminium-Hydroxyphosphit und/oder mindestens ein basisches Calcium-Aluminium-Hydroxi-Carboxylat, sowie gegebenenfalls mindestens ein flüssiges oder festes organisches oder anorganisches Zinksalz enthält, bleibt der hohe elektrische Widerstandswert der Formmasse über einen langen Zeitraum auch unter Feuchtigkeitseinfluss, wie für Kabelummantelungen gefordert, konstant.

DE 103 56 670 A1 offenbart ein Stabilisatorsystem für halogenhaltige Polymere, insbesondere PVC, enthaltend ein primäres oder sekundäres Amin und/oder Diamin, ein Glycidylderivat und andere und ein Perchloratester Salz.

DE 103 18 910 A1 beschreibt ein Stabilisatorsystem zur Stabilisierung halogenhaltiger Polymere, eine Stabilisatormischung zur Stabilisierung von chlorhaltigen Polymeren, umfassend mindestens ein Sulfatesteresalz, ein Alkanolamin.

DE 10 2006 011933 A1 beschreibt Stabilisatorzusammensetzungen für halogenhaltige Polymere mit verbesserter Anfangsfarbe und verbesserter Farbhaltung. Die Erfindung betrifft eine Stabilisatorzusammensetzung für halogenhaltige Polymere, umfassend mindestens eine Verbindung aus der Gruppe A) und mindestens eine Verbindung aus der Gruppe B), wobei die Gruppe A) aus Semicarbaziden, Carbaziden, Carbazonen und Carbodiazonen und deren Salzen und die Gruppe B) aus Guanidinen und Melaminen, Supersäuren und Salzen der Supersäuren, Epoxy- und Glydylverbindungen, 1,3-Dicarbonyverdindungen, Polyolen, sterisch gehinderten Aminen, Hydrotalciten, Zeolithen und Alkalialumocarbonaten, Hydrocalumiten, Metallhydroxiden, Metalloxiden, Metallhydrogencarbonaten und Metallkarbonaten, Metallseifen, Organozinnverbindungen, organischen Phosphitestern, Aminoalkoholen und hydroxylgruppenhaltigen Isocyanuraten, alph-beta-ungesattigten, beta-Aminocarbonylverbindungen, Aminouracylverbindungen und Aminothiouralcilverbindungen und Verbindungen mit mindestens einem mercaptofunktionellen, sp²-hybridisierten C-Atom besteht. Derart stabilisierte Polymere zeichnen sich insbesondere durch eine verbesserte Anfangsfarbe sowie eine verbesserte Farbhaltung aus.

Darüber hinaus sind jedoch für die Gebrauchseigenschaften eines solchen Formkörpers über einen längeren Zeitraum Farbstabilität und möglichst unveränderte Materialeigenschaften wichtig. Insbesondere bei Formkörpern, die Licht, wechselnden Temperaturen oder anderen äußeren Einflüssen ausgesetzt sind, kommt es mit zunehmender Gebrauchsdauer zu Veränderungen der Farbe und der Materialeigenschaften, die gegebenenfalls bis zur Unbrauchbarkeit des Formkörpers fortschreiten können.

Die Verwendung der aus dem Stand der Technik bekannten, schwermetallhaltigen Stabilisatoren stößt jedoch bei der verarbeitenden Industrie und beim Anwender aus verschiedenen Gründen zunehmend auf Ablehnung.

Um dem Problem der Anfangsfarbe und dem Problem der Farbstabilität entgegenzuwirken, wurden in der Vergangenheit organische Stabilisatorzusammensetzungen eingesetzt, die zum einen während der Verarbeitungsphase zum Formkörper und zum anderen im Langzeitgebrauch den Veränderungen von Farbe und Materialeigenschaften entgegenwirken sollen.

So beschreibt beispielsweise DE 1 569 056 A eine stabilisierte Formmasse, die aus einem Polymerisat oder Mischpolymerisat des Vinylchlorids und einer Stabilisatorkombination aus einem mono-oder diaromatisch substituierten Harnstoff oder Thioharnstoff und einem organischen Phosphit besteht. Die Stabilisatorkombination kann weiterhin noch Magnesiumoxid oder Magnesiumstearat enthalten. Problematisch wirkt sich bei der beschriebenen Formmasse jedoch aus, dass ihre Farbstabilität oft unzureichend ist.

DE 746 081 betrifft ein Verfahren zur Verbesserung der Hitzebeständigkeit von hochpolymeren halogenhaltigen Stoffen. Beschrieben wird die Stabilisierung von halogenhaltigen Polymeren mit alkalisch wirkenden Mitteln zusammen mit Aminen oder Carbamiden, die ein bewegliches, durch Alkali ersetzbares Wasserstoffatom besitzen. Problematisch wirkt sich bei dem beschriebenen Verfahren jedoch aus, dass die Anfangsfarbe der beschriebenen hochpolymeren halogenhaltigen Stoffe zu wünschen übrig lässt.

Die DE 36 36 146 C betrifft ein Verfahren zur Stabilisierung chlorhaltiger Harze. Bei dem beschriebenen Verfahren werden einem polymerisierten Harz ein Aminocrotonsäureester und eine metallionenenfreie Epoxyverbindung zugesetzt. Nachteilig wirkt sich bei dem beschriebenen Verfahren jedoch aus, dass die Anfangsfarbe der Harze gehobenen Anforderungen in vielen Fällen nicht entspricht.

Die US 5.872.166 A betrifft PVC-Stabilisatoren, die eine überbasische Mischung von Salzen unsubstituierter oder alkylsubstituierter Benzoesäuren gegebenenfalls mit einer oder mehreren aliphatischen Fettsäuren, einem Carbonat- oder Silikatstabilisator und gegebenenfalls einem oder mehreren Polyolen mit 2 bis 10 OH-Gruppen enthalten. Nachteilig wirkt sich bei dem beschriebenen Stabilisator jedoch häufig die mangelnde Stabilisierung im Hinblick auf die Anfangsfarbe aus.

Aus der US 2006/0188428 A1 ist ein Kunststoffadditiv bekannt, das aus Partikeln aus kalziniertem und rehydratisiertem Dolomit besteht. Die Partikel haben eine mittlere Größe von 2.4 µm, und aufgrund der geringen Größe und dem Aufbau aus kleineren Primärpartikeln eine große spezifische Oberfläche.

In der DE 35 42 719 A1 sind magnesiumhydroxidhaltige Füllstoffe für organische Polymere beschrieben. Die Partikelgröße dieser als Brandverzögerer genutzten pulverförmigen Füllstoffe liegt unterhalb von 20 µm. Hergestellt wird der Füllstoff durch Kalzinieren von Ca-Mg-Mischverbindungen (z.B. Dolomit) und anschließender Hydratisierung. Bei der Hydratisierung werden wässrige Tensid-Lösungen zugesetzt, um Tensidmoleküle an der Oberfläche der mineralischen Partikel anzulagern und diese zu hydrophobisieren um u.a. Agglomeratbildungzu vermeiden und sie als einzelne fein dispergierte Partikel in das Polymer einbringen zu können.

Aus der EP 0 945 483 A1 sind Stabilisatoren für halogenhaltige Polymerharze zur Verbesserung deren thermischen Beständigkeit bekannt. Dazu werden Verbindungen der Dolomitreihe mit Zinksalzen vorgeschlagen. Die Verbindungen der Dolomitreihe werden durch Brennen von natürlichem oder künstlichem Dolomit bei 700 - 800°C oder 900 - 1000°C und optional anschließendem Hydratisieren erhalten. Die erhaltenen Partikel werden durch Zusätze von Zinkverbindungen und organischen Säuren oberflächenmodifiziert.

Es besteht daher ein Bedürfnis nach einer Stabilisatorzusammensetzung für halogenierte Polymere, die frei von Schwermetallen ist und trotzdem eine ausgezeichnete Anfangsfarbe und Farbstabilität bewirkt. Ein besonderes Bedürfnis besteht nach einer Stabilisatorzusammensetzung, die bei der Herstellung von Formkörpern aus halogenhaltigen Polymeren eine gute Anfangsfarbe gewährleistet und die auch bei kurzzeitigen Produktionsunterbrechungen und einer damit einhergehenden höheren thermischen Belastung des Werkstoffes erhalten bleibt. Weiterhin bestand ein Bedürfnis nach einer Stabilisatorzusammensetzung, die auch eine gute Farbhaltung im Langzeitgebrauch eines aus einem halogenhaltigen Polymer hergestellten Formkörpers ermöglicht.

Der vorliegenden Erfindung liegt daher die Aufgabe zugrunde, eine Polymer-stabilisierende Zusammensetzung bereit zu stellen, welche umweltfreundlich, halogenfrei und einfach handhabbar ist sowie eine ausgezeichnete Ausgangsfarbe und Farbstabilität insbesondere bei thermischer Beanspruchung aufweist und als Säurefänger dient. Zudem sollte die Zusammensetzung nicht toxisch und nicht korrosiv sein, nicht flüchtig, inert, farbneutral, recyclierbar und wirtschaftlich herstellbar sein. Darüber hinaus liegt der Erfindung die Aufgabe zugrunde, ein Verfahren zur Herstellung der Zusammensetzung und ihre Verwendung anzugeben.

Diese Aufgabe wird durch die Merkmale des Patentanspruchs 1 gelöst.

Ein wesentlicher Punkt der Erfindung besteht darin, die Verwendung einer Stabilisatorzusammensetzung, die frei von Schwermetallen ist, und aus mindestens einer natürlich vorkommenden Erdalkaliverbindung besteht, die als Calcium-Magnesium-Mischverbindung vorliegt, zur Stabilisierung halogenhaltiger Polymere bereitzustellen, wobei die Erdalkaliverbindung eine kalzinierte Erdalkalicarbonatverbindung mit mehr als 50,0 Ma.-% CaO bezogen auf den Ca-Anteil der Calcium-Magnesium-Mischverbindung ist, wobei die Erdalkaliverbindung jeweils mit weniger als 50,0 Ma.-% CaMg(CO₃)₂ in Form submikronskaliger Primärpartikel mit einer Partikelgröße, gemessen als d₅₀ mittels Laserbeugung oder REM oder TEM, die zumindest in einer Dimension 0,1 - 0,3 µm beträgt, vorliegt.

Die Erdalkalicarbonatverbindung liegt dabei als Calcium-Magnesium-Mischverbindung vor, vgl. P1 in Tabelle 1.

Vorzugsweise weist die Erdalkaliverbindung vollkalziniert mehr als 70,0 Ma.-% CaO, bevorzugt mehr als 90,0 Ma.-% CaO

Vorzugsweise liegen die Korngrößen der Primärpartikel im Bereich von 50 nm bis 200 nm.

Weiter bevorzugt weist die Calcium-Magnesium-Mischverbindung einen Weißgrad R 457 nach ISO größer 80 %, bevorzugt größer 84 %, meist bevorzugt größer 88 % auf.

Das Verfahren zur Herstellung einer Zusammensetzung zur Stabilisierung halogenhaltiger Polymere umfasst die vollständige Kalzinierung mindestens einer natürlich vorkommenden Erdalkalicarbonatverbindung, wobei die vollständige Kalzinierung bevorzugt bei Temperaturen von 1000°C bis 1200°C durchgeführt wird.

Bei der Verwendung der Zusammensetzung wird die Erdalkaliverbindung in einer Konzentration von bis zu 25,0 % dem halogenhaltigen Polymer beigemischt. Bevorzugt wird die Erdalkaliverbindung in einer Konzentration von 0,1-10,0 % dem halogenhaltigen Polymer beigemischt.

Die Erfindung und die sich aus ihr ergebenden Vorteile werden anhand folgender Beispiele näher erläutert.

### Beispiel 1

Als Ausgangszusammensetzung wird eine Erdalkaliverbindung als natürliches, hochreines Mischmineral eingesetzt. Dieses zeichnet sich durch die in nachfolgender Tabelle 1 unter Produkt 1 beschriebenen Eigenschaften aus:

**Tabelle 1. Übersicht der Zusammensetzungen**

| | | **Produkt 1** | **Produkt 1** | **Produkt 1** | **Produkt 2a** | **Produkt 2b** | **Produkt 2c** | **Produkt 3** | **Produkt 4** | **Produkt 5** |
|---|---|---|---|---|---|---|---|---|---|---|
| | Einheit | Unkalziniert | Unkalziniert Bevorzugt | Unkalziniert besonders bevorzugt | Teilkalziniert Ca. 700-800°C oder/und Ca. 800-900°C Gekörnt >0,5 mm | Teilkalziniert Ca. 700-800°C: oder/und Ca.800-900°C 2a) gemahlen auf < 0,5 mm | Teilkalziniert Ca. 700-800°C oder/und Ca.800-900°C Mehl < 0,5mm, aus Dolomitmehl <0,5 mm | Teilkalziniert 2a, 2b. 2c Rehydratisiert | Vollkalziniert Ca. 1000-1200 °C, aus 1, 2a, 2b, 2c, ggf. (zusätzlich) gemahlen < 0,5 mm | Vollkalziniert Rehydratisiert Aus 4 |
| CaO | Ma-% | < 35 | <34 | <32 | | | | | | |
| MgO | Ma-% | > 10 | < 15 | > 18 | | | | | | |
| SiO2 | Ma-% | < 2 | <1 | < 0,5 | | | | | | |
| Al2O3 | Ma-% | < 1 | < 0,5 | < 0,1 | | | | | | |
| Fe2O3 | Ma-% | < 0,5 | < 0,3 | < 0,1 | | | | | | |
| TiO2 | Ma-% | < 0,5 | < 0,3 | < 0,1 | | | | | | |
| K2O | Ma-% | < 0,5 | < 0,3 | < 0,1 | | | | | | |
| Na2O | Ma-% | < 0,5 | < 0,3 | < 0,1 | | | | | | |
| P2O5 | Ma-% | < 0,5 | < 0,3 | < 0,1 | | | | | | |
| Glühverlust | Ma-% | 43-53 | 43-53 | 43-53 | | | | | | |
| CaMg(CO3) | | | | | <50 % CaMg(CO3)2, | <50 % | <50 % | <50 % | <50 % | <50 % |
| 2 | Ma-% | > 90 | > 95 | >98 | P1 | CaMg(CO3)2, P1 | CaMg(CO3)2, P1 | CaMg(CO3)2, P1 | CaMg(CO3)2, P1 | CaMg(CO3)2, P1 |
| CaCO3 | Ma-% | < 60 | < 58 | < 56 | 100 % CaCO3 P1 | 100 % CaCO3 P1 | 100 % CaCO3 P1 | > 50 % CaCO3 P1 | < 50 % CaCO3 P1 | < 50 % CaCO3 P1 |
| CaO | Ma-% | < 40 | < 20 | < 10 | <5 | <5 | <5 | < 50 % CaCO3 P1 | > 50 % CaCO3 P1 | < 50 % CaCO3 P1 |
| Ca(OH)2 | Ma-% | < 40 | < 20 | < 10 | <5 | <5 | <5 | <5 | <5 | > 50 % CaCO3 P1 |
| MgCO3 | Ma-% | > 35 | > 38,0 | > 40,0 | <50 % MgCO3 P1 | <50 % MgCO3 P1 | <50 % MgCO3 P1 | <50 % MgCO3 P1 | <50 % MgCO3 P1 | <50 % MgCO3 P1 |
| MgO | Ma-% | < 40 | < 20 | < 10 | >50 % MgCO3 P1 | >50 % MgCO3 P1 | >50 % MgCO3 P1 | <50 % MgCO3 P1 | >50 % MgCO3 P1 | < 50 % MgCO3 P1 |
| Mg(OH)2 | Ma-% | < 40 | < 20 | < 10 | <5 | <5 | <5 | > 50 % MgCO3 P1 | <5 | > 50 % MgCO3 P1 |
| pH-Wert | | >7 | >7 | >7 | >9 | >9 | >9 | >9 | >9 | >9 |
| Feuchte 100°C | Ma-% | <10 | < 5 | < 2 | <3 | <3 | <3 | <5 | <3 | <5 |
| Korngröße | µm | 0-10000 | 0-10000 | 0-10000 | >500 | <500 | <500 | <500 | <500 | <500 |

Durch die indirekte Teilkalzinierung bei 700-800°C dieses Rohstoffes, wobei in der Regel eine Korngröße > 0,5 mm eingesetzt wird, alternativ dazu auch Mehl, und einer Mindestumsetzung des enthaltenen MgCO₃ von 50 % zu MgO (kaustische Magnesia) wird das unter Produkt 2a, vgl. Tabelle 1 und 2, beschriebene Teilkalzinat als Körnung erhalten. CaCO₃ wird dabei chemisch nicht verändert. Dieses teilkalzinierte Produkt ist bereits in Körnung gewerblich erhältlich.

Durch die Teilkalzinierung dieses Rohstoffs bei 800-900 °C, in der Regel wird eine Korngröße > 0,5 mm dafür eingesetzt, alternativ dazu auch Mehl, und einer Mindestumsetzung des enthaltenen MgCO₃ von 50 % zu MgO (kaustische Magnesia) wird eine weitere, bevorzugte Variante des unter Produkt 2a beschriebenen Teilkalzinates erhalten. CaCO₃ wird dabei chemisch nicht verändert. Dieses teilkalzinierte Produkt ist am Markt nicht erhältlich.

Durch indirekte Vollkalzinierung von gemahlenem oder granuliertem Produkt 1 oder 2a, 2b oder 2c bei 1000-1200 °C wird das bevorzugte, unter Produkt 4 beschriebene Material erhalten. Dabei wird auch CaCO₃ zu mehr als 50 % zu CaO umgesetzt, MgO liegt als kaustische Magnesia vor. Dieses Produkt ist noch nicht in der laut Tabelle angegebenen Spezifikation erhältlich.

Durch Rehydratisierung von MgO bzw. CaO der Produkte 2a, 2b, 2c und/oder Produkt 4 zu mehr als 50 % werden neue Materialien Produkt 3 bzw. Produkt 5 erhalten, die in der laut Tabelle angegebenen bevorzugten Form bislang noch nicht erhältlich sind.

Unter indirekter Kalzinierung wird hier verstanden, dass das thermisch zu behandelnde Produkt erhitzt wird, wobei es bevorzugt nicht einer direkten Flamme oder einem Heißgasstrom aus einem direkten Verbrennungsprozess ausgesetzt ist. Dies kann z.B. durch ein auf der Außenseite elektrisch, gas- oder ölbeheiztes Drehrohr realisiert werden.

### Beispiel 2

Abbau des Produktes 1, vgl. Tabelle, aus der Lagerstätte, brechen, sieben, trocknen, ggf. Magnetscheidung, Lagerung, Abpackung, welches ein im Stand der Technik bereits bekannter und realisierter Prozess ist.

### Produkte 2

Produkt 2a: Basis hierzu ist Produkt 1, gekörnt > 0,5 mm, indirekte Kalzinierung bei 700-800°C des enthaltenen MgCO₃ zu mindestens 50 % zu MgO, Lagerung, Absackung. Dies ist ein bereits bekannter und realisierter Prozess: Produkt 2a. CaCO₃ bleibt bei der indirekten Kalzinierung chemisch unverändert. Ein bevorzugtes Produkt 2a wird erhalten, wenn die Teilkalzinierung bei 800-900°C durchgeführt wird. Dieses Produkt ist in der beschriebenen Form bislang nicht am Markt erhältlich, vgl. Tabelle 2.

Produkt 2b: Dies ist ein Mehl < 0,5 mm. Dieses wird hergestellt, indem Produkt 2a nach der Teilkalzinierung gemahlen wird. Dies ist ein neuer Verfahrensschritt: Produkt 2b. Ein bevorzugtes Produkt 2b wird erhalten, wenn die vorhergehende Teilkalzierung bei 800-900°C durchgeführt und danach wie beschrieben zerkleinert wird. Dieses Produkt ist in der beschriebenen Form bislang nicht am Markt erhältlich, vgl. Tabelle 2.

Produkt 2c: Neu ist auch, dass die Teilkalzinierung zur Realisierung der gewünschten Eigenschaften auch durch die Verwendung von Mehl aus Produkt 1 durch indirekte Kalzinierung bei 700-800°C des enthaltenen MgCO₃ zu 50 % zu MgO erzeugt werden kann und in der weiteren Verarbeitung sogar entscheidende Vorteile bietet, Produkt 2c. CaCO₃ bleibt bei der indirekten Kalzinierung chemisch unverändert. Ein bevorzugtes Produkt 2c wird erhalten, wenn die Teilkalzinierung bei 800-900°C durchgeführt wird. Dieses Produkt ist in der beschriebenen Form bislang nicht am Markt erhältlich, vgl. Tabelle 2.

**Tabelle 2.**

| | | **Produkt P2** | **Produkt 2** | **Produkt 2** |
|---|---|---|---|---|
| | Einheit | Teilkalziniert | Teilkalziniert | Teilkalziniert |
| | | | bevorzugt | meist bevorzugt |
| CaMg(CO3)2 | Ma-% | < 50 % CaMg(CO3)2, P1* | <30% CaMg(CO3)2, P1* | <10 % CaMg(CO3)2, P1* |
| CaCO3 | Ma-% | 100 % CaCO3 P1* | 100 % CaCO3 P1* | 100 % CaCO3 P1* |
| CaO | Ma-% | <5 | <5 | <5 |
| Ca(OH)2 | Ma-% | <5 | <5 | <5 |
| MgCO3 | Ma-% | <50 % MgCO3 P1* | <30 % MgCO3 P1* | <10 % MgCO3 P1* |
| MgO | Ma-% | >50 % MgCO3 P1* | >70 % MgCO3 P1* | >90 % MgCO3 P1* |
| Mg(OH)2 | Ma-% | <5 | <5 | <5 |

| | | | | |
|---|---|---|---|---|
| * jeweils bezogen auf P1 | | | | |

### Produkt 3:

Dieses Produkt ist in den laut Tabelle 1 angegebenen Eigenschaften bislang noch nicht erhältlich. Das Material lässt sich beispielsweise dadurch herstellen, indem Produkte 2a in Körnung gemahlen (2b) und anschließend das erhaltene MgO zu mindestens 50 % auf bekannter Weise rehydratisiert wird. Geeignete Verfahren dazu sind beispielsweise das Löschen von CaO zu Ca(OH)₂ mittels Löschmaschinen der Fa. Pfeiffer.

Die Verwendung von einem Teilkalzinatmehl (Produkt 2c), welches ohne Mahlung eines gekörnten Teilkalzinates (2b) erhalten wird, zeigt hier besondere Vorteile. Da es durch die Mahlung von Teilkalzinatkörnung (2a) durch Luftfeuchtigkeit bereits zu einer teilweisen unkontrollierten und unerwünschten Rehydratisierung kommen kann und dies die weitere gezielte Rehydratisierung mittels oben beschriebenen Verfahren durch eine dann vorhandene verminderte Reaktivität einschränkt. Dies ist nicht der Fall, wenn bereits ein Mehl auf Basis von Produkt 1 zu Produkt 2c teilkalziniert wird und dieses danach direkt der Rehydratisierung zugeführt wird, um Produkt 3 zu erhalten, wobei auch hier mindestens 50 % des erhaltenen MgO rehydratisiert werden, vgl. Tabelle 3.

Besonders bevorzugt sind dabei zur Herstellung von Produkten 3 die Teilkalzinate 2a bis 2c aus der Behandlung bei 800-900 °C, vgl. Tabelle 3.

**Tabelle 3.**

| | | **Produkt P3** | **Produkt P3** | **Produkt P3** |
|---|---|---|---|---|
| | Einheit | Rehydratisiert | Rehydratisiert | Rehydratisiert |
| | | | bevorzugt | meist bevorzugt |
| CaMg(CO3)2 | Ma-% | <50 % CaMg(CO3)2, P1 | | |
| CaCO3 | Ma-% | > 50 % CaCO3 P1 | > 70 % CaCO3 P1 | > 90 % CaCO3 P1 |
| CaO | Ma-% | < 50 % CaCO3 P1 | < 30 % CaCO3 P1 | < 10 % CaCO3 P1 |
| Ca(OH)2 | Ma-% | <5 | <5 | <5 |
| MgCO3 | Ma-% | <50 % MgCO3 P1 | <30 % MgCO3 P1 | <10 % MgCO3 P1 |
| MgO | Ma-% | <50 % MgCO3 P1 | <30 % MgCO3 P1 | <10 % MgCO3 P1 |
| Mg(OH)2 | Ma-% | > 50 % MgCO3 P1 | > 70 % MgCO3 P1 | > 90 % MgCO3 P1 |

### Produkt 4 (Erfindungsgemäß):

Hierzu kann Produkt 1 einer indirekten Kalzinierung bei 1000-1200 °C zugeführt werden. Es kann aber auch Teilkalzinat (Produkt 2a, 2b, 2c) verwendet werden, also eine zweistufige Kalzinierung. Dabei werden mindestens 50 % des enthaltenen CaCO₃ zu CaO umgesetzt. Ein nach der Tabelle beschriebenes Vollkalzinat ist bislang noch nicht am Markt im technischen Maßstab erhältlich, vgl. Tabelle 4.

**Tabelle 4.**

| | | **Produkt P4** | **Produkt P4** | **Produkt P4** |
|---|---|---|---|---|
| | Einheit | Vollkalziniert | Vollkalziniert | Vollkalziniert |
| | | | bevorzugt | meist bevorzugt |
| CaMg(CO3)2 | Ma-% | <50 % CaMg(CO3)2, P1 | <30 % CaMg(CO3)2, P1 | <10 % CaMg(CO3)2, P1 |
| CaCO3 | Ma-% | < 50 % CaCO3 P1 | < 30 % CaCO3 P1 | < 10 % CaCO3 P1 |
| CaO | Ma-% | > 50 % CaCO3 P1 | > 70 % CaCO3 P1 | > 90 % CaCO3 P1 |
| Ca(OH)2 | Ma-% | <5 | <5 | <5 |
| MgCO3 | Ma-% | <50 % MgCO3 P1 | <30 % MgCO3 P1 | <10 % MgCO3 P1 |
| MgO | Ma-% | >50 % MgCO3 P1 | >70 % MgCO3 P1 | >90 % MgCO3 P1 |
| Mg(OH)2 | Ma-% | <5 | <5 | <5 |

### Produkt 5:

Dieses wird erhalten, indem Produkt 4 rehydratisiert wird. Dazu wird gekörntes oder bereits gemahlenes Vollkalzinat, wenn notwendig, einer zusätzlichen Mahlung zugeführt und anschließend rehydratisiert, wobei mindestens 50 % des enthaltenen CaO und MgO zu Ca(OH)2 und Mg(OH)2 umgesetzt werden, vgl. Tabelle 5. Dies wird bevorzugt durchgeführt, indem bereits ein Vollkalzinat verwendet wird, welches über die Kalzinierung von gemahlenem Produkt 1 eingesetzt wird, da auch hier die Reaktivität durch die Mahlung des Vollkalzinates durch die unerwünschte und unkontrollierte Wasseraufnahme aus der Luftfeuchtigkeit beim Mahlprozess eine spätere Rehydratisierung mittels oben beschriebenem Verfahren Pfeiffer erschwert.

**Tabelle 5.**

| | | **Produkt P5** | **Produkt P5** | **Produkt P5** |
|---|---|---|---|---|
| | Einheit | Vollkalziniert Rehydratisiert | Vollkalziniert Rehydratisiert | Vollkalziniert Rehydratisiert |
| | | | bevorzugt | meist bevorzugt |
| CaMg(CO3)2 | Ma-% | <50 % CaMg(CO3)2, P1 | <30 % CaMg(CO3)2, P1 | <10 % CaMg(CO3)2, P1 |
| CaCO3 | Ma-% | < 50 % CaCO3 P1 | < 30 % CaCO3 P1 | < 10 % CaCO3 P1 |
| CaO | Ma-% | < 50 % CaCO3 P1 | < 30 % CaCO3 P1 | < 10 % CaCO3 P1 |
| Ca(OH)2 | Ma-% | > 50 % CaCO3 P1 | > 70 % CaCO3 P1 | > 90 % CaCO3 P1 |
| MgCO3 | Ma-% | <50 % MgCO3 P1 | <30 % MgCO3 P1 | <10 % MgCO3 P1 |
| MgO | Ma-% | < 50 % MgCO3 P1 | < 30 % MgCO3 P1 | < 10 % MgCO3 P1 |
| Mg(OH)2 | Ma-% | > 50 % MgCO3 P1 | > 70 % MgCO3 P1 | > 90 % MgCO3 P1 |

Zusammenfassend lässt sich festhalten, dass sich auch anhand entsprechender REM-Aufnahmen deutliche Unterschiede der erfindungsgemäßen Zusammensetzungen im Vergleich zu den bereits bekannten Materialien und deren Mischungen zeigen, beispielsweise in der Kornform, Korngröße, der Mikrostruktur oder der Anlagerung der Partikel zueinander. Im Besonderen zeigen die erfindungsgemäßen Zusammensetzungen sowohl in der Oxidform als auch hydratisiert submikron- bzw. nanoskalige Bestandteile (also CaO, Ca(OH)₂, CaCO₃, MgO, Mg(OH)₂), die bei den Produkten nach dem Stand der Technik nicht in dieser Form festgestellt werden können. Unter submikronskalig werden hier Partikel verstanden, deren Partikelgröße, gemessen als d50 mittels Laserbeugung, REM oder TEM, zumindest in einer Dimension 0,1-0,3 µm beträgt. Unter nanoskalig werden hier Partikel verstanden, deren Partikelgröße, gemessen als d50 mittels Laserbeugung, REM oder TEM, zumindest in einer Dimension 100 nm oder kleiner ist. In der Regel handelt es bei den hier beschriebenen erfindungsgemäßen submikron- als auch nanoskaligen Partikeln eher um sphärische oder ovale und nicht um plättchen- oder faserförmige Partikel.

Damit ist gezeigt, dass die Zusammensetzungen eine gegenüber dem Stand der Technik verbesserte und weiterreichende Funktionalität aufweisen.

### Beispiel 3

Das folgende Beispiel zeigt die Verwendung erfindungsgemäßer Zusammensetzungen als Zusatz für Stabilisatormischungen für halogenierte Polymere, z.B. PVC, insbesondere als Säurefänger, vgl. Tabelle 7 und 8.

Wie einleitend beschrieben, werden Polymeren Stabilisatoren zugesetzt. Bei PVC sind dies z. B. Säurefänger, um beispielsweise die thermische Stabilität von PVC zu verbessern. Dies kann beispielsweise durch die verzögerte Freisetzung von HCl-Gas oder die verzögerte Verfärbung des PVC bei thermischer Belastung zum Ausdruck kommen und die Effektivität der Wirkung der Zusätze so auch gemessen werden. An nachfolgendem Beispiel wird dies aufgezeigt, wobei verschiedene mineralische Zusätze auf deren stabilisierende Wirkung auf PVC geprüft werden, vor allem die HCl-Abspaltung und die Verfärbung des PVC.

Dies erfolgt durch Mischen von PVC-Plastisol mit definierten Mengen verschiedener mineralischer Zusätze, die Mischungen wurden danach in Probengefäße überführt, im Gasraum darüber ein Indikatorpapier angebracht und die Gefäße danach abgedeckt. Danach wurden die Probengefäße auf 180°C gebracht und die Farbänderung des Indikators als auch der PVC-Mischung dokumentiert. Zur Bestätigung der Ergebnisse wurden in einer zweiten Versuchsreihe einzelne ausgewählte Prüfungen wiederholt.

**Tabelle 6. Beschreibung der Korngröße der eingesetzten Materialien**

| | **Material** | **d10 µm** | **d50 µm** | **d90 µm** | **Bemerkung** |
|---|---|---|---|---|---|
| 0 | Blindwert | -- | -- | -- | nb |
| 1 | Mg(OH)2, synthetisch | 0,9 | 3,0 | 17,4 | Bimodal |
| 2 | Mg(OH)2, grob natürlich | | | | |
| 3 | Mg(OH)2, synthetisch | 0,8 | 1,9 | 4,1 | Monomodal |
| 4 | Ca(OH)2, natürlich | 1,1 | 3,4 | 9,3 | Monomodal |
| 5 | MgCa(OH)2, natürlich | 1,4 | 7,6 | 18,0 | Monomodal |
| 6 | CaO, natürlich | 0,2 | 5,7 | 48,9 | Trimodal |
| 7 | MgO, natürlich | 1,0 | 16,7 | 51,7 | Bimodal, Grobanteil |
| 8 | CaCO3, natürlich | 0,8 | 4,0 | 14,8 | Leicht bimodal |
| 9 | Mischung aus 6+7, 58,1 % 6 und 41,8 % 7 | * | * | * | nb |
| 10 | Mischung aus 4+2: 56,0 % 4 und 44,0 %2 | * | * | * | nb |
| 11 | Mischung aus 8+2: 63,2 % 8 und 36,8 % 2 | * | * | * | nb |
| 12 | Produkt 2a | 1,1 | 8,2 | 26,7 | Bimodal |
| 13 | Produkt 3 aus 2a | 1,4 | 8,4 | 27,1 | Bimodal |
| 14 | Produkt 2a, bevorzugt (800-900°C) | 0,7 | 2,1 | 5,5 | Monomodal |
| 15 | Produkt 3, bevorzugt, aus Produkt 2a 800-900°C, (bevorzugt) | 0,8 | 2,9 | 7,0 | Monomodal |
| 16 | Produkt 4 aus Produkt 2a, nach Mahlung (erfindungsgemäß) | 0,5 | 1,3 | 4,7 | Monomodal |
| 17 | Produkt 5 aus Produkt 4, aus Produkt 2a, nach Mahlung | 0,9 | 2,7 | 24,1 | Mono (tri)modal |
| 18 | Produkt aus Produkt 5 + ATH in wäss., alk. Medium bei erhöhter Temp. | 1,6 | 11,6 | 27,9 | Etwas bimodal |
| 19 | ATH 735 pur | 2,8 | 16,5 | 67,7 | Bimodal |
| 20 | Wettbewerbsprodukt: Co-Stabilisator | -- | -- | -- | nb |

| | | | | | |
|---|---|---|---|---|---|
| nb = nicht bestimmt | | | | | |

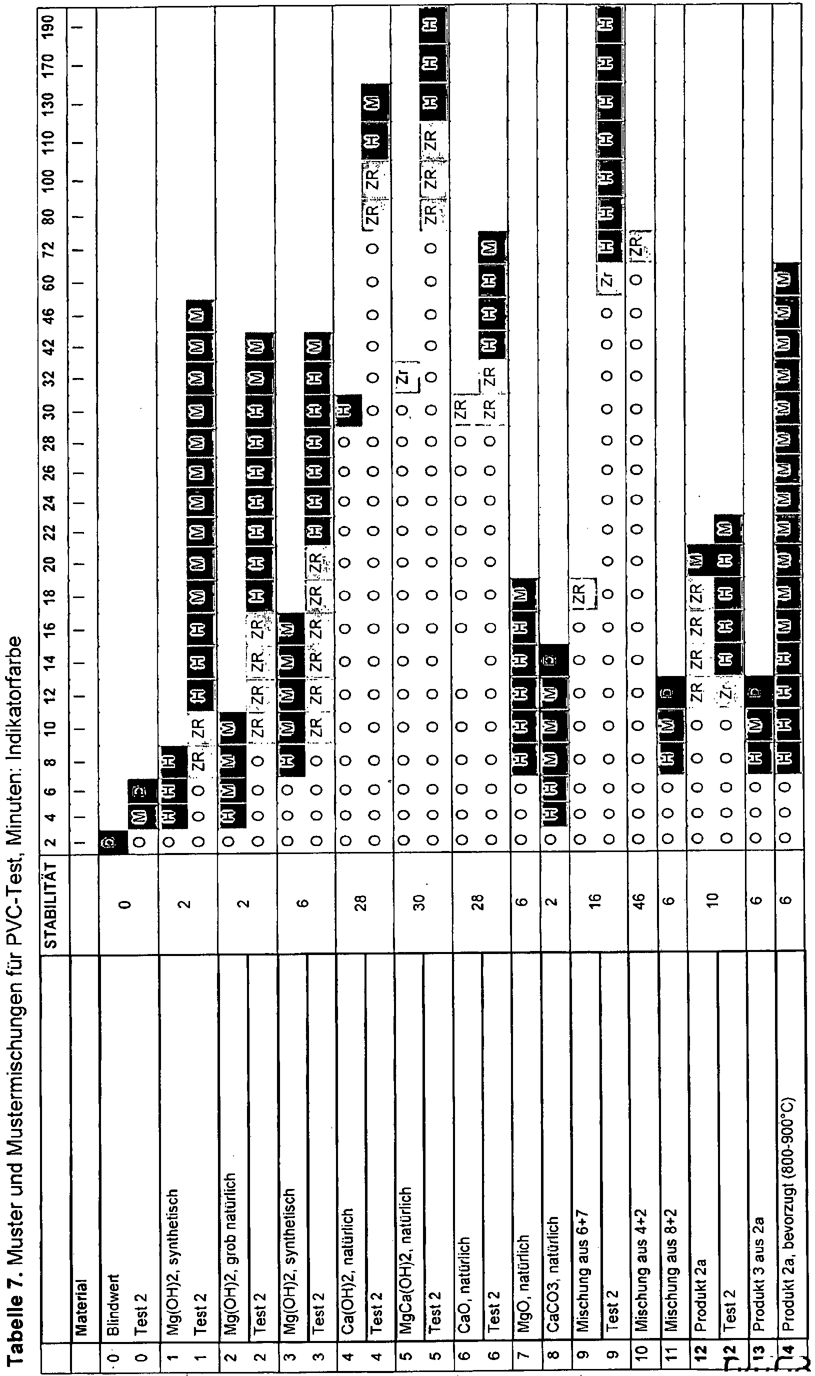

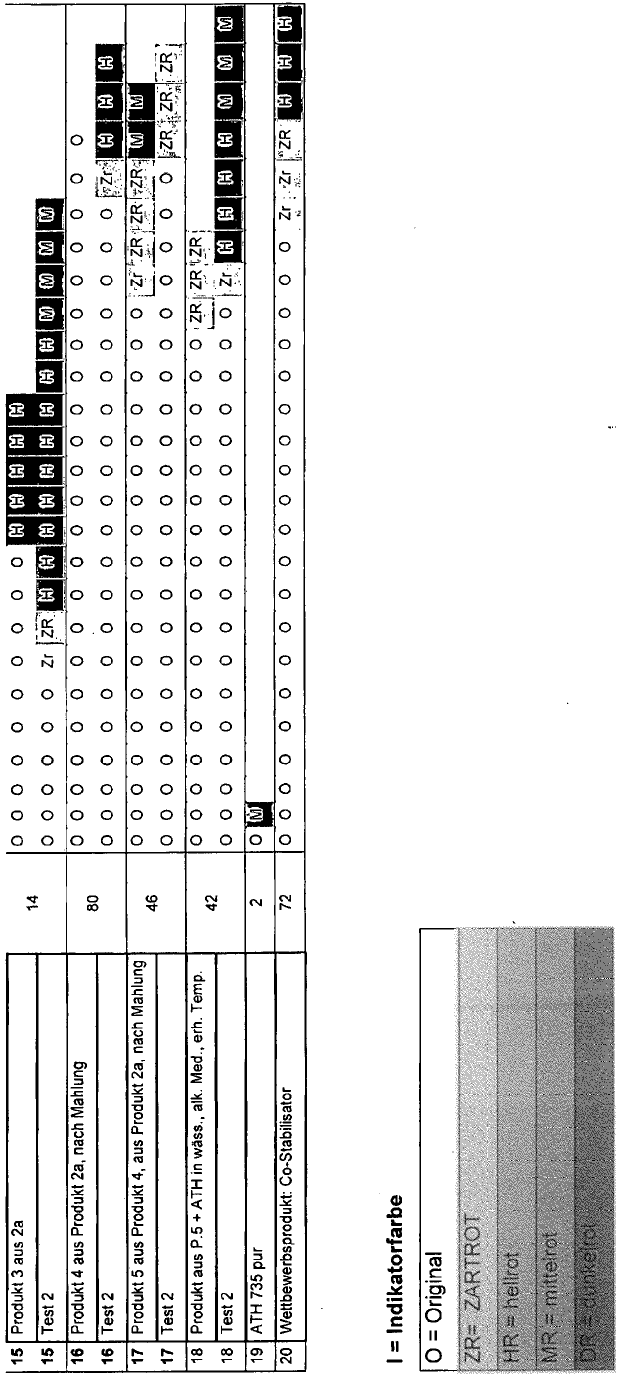

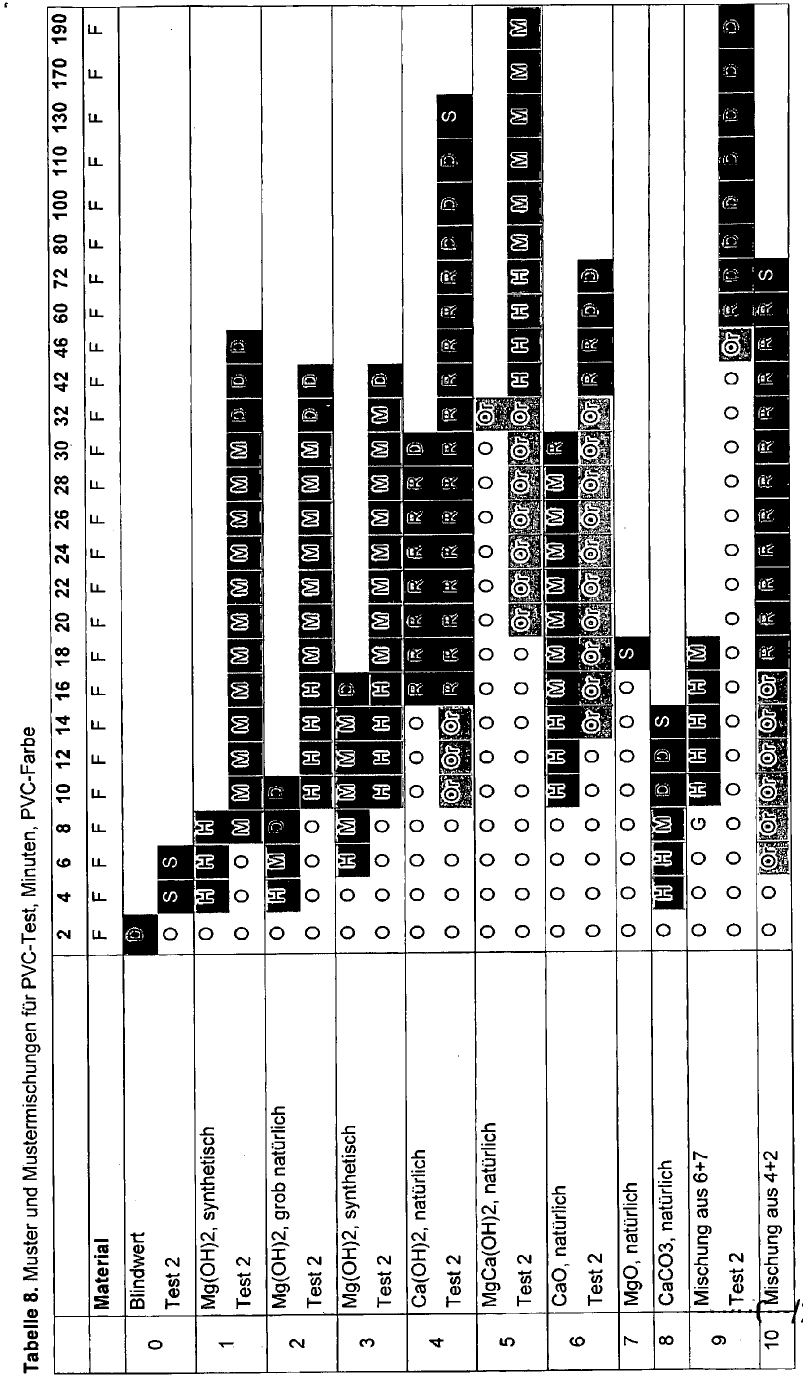

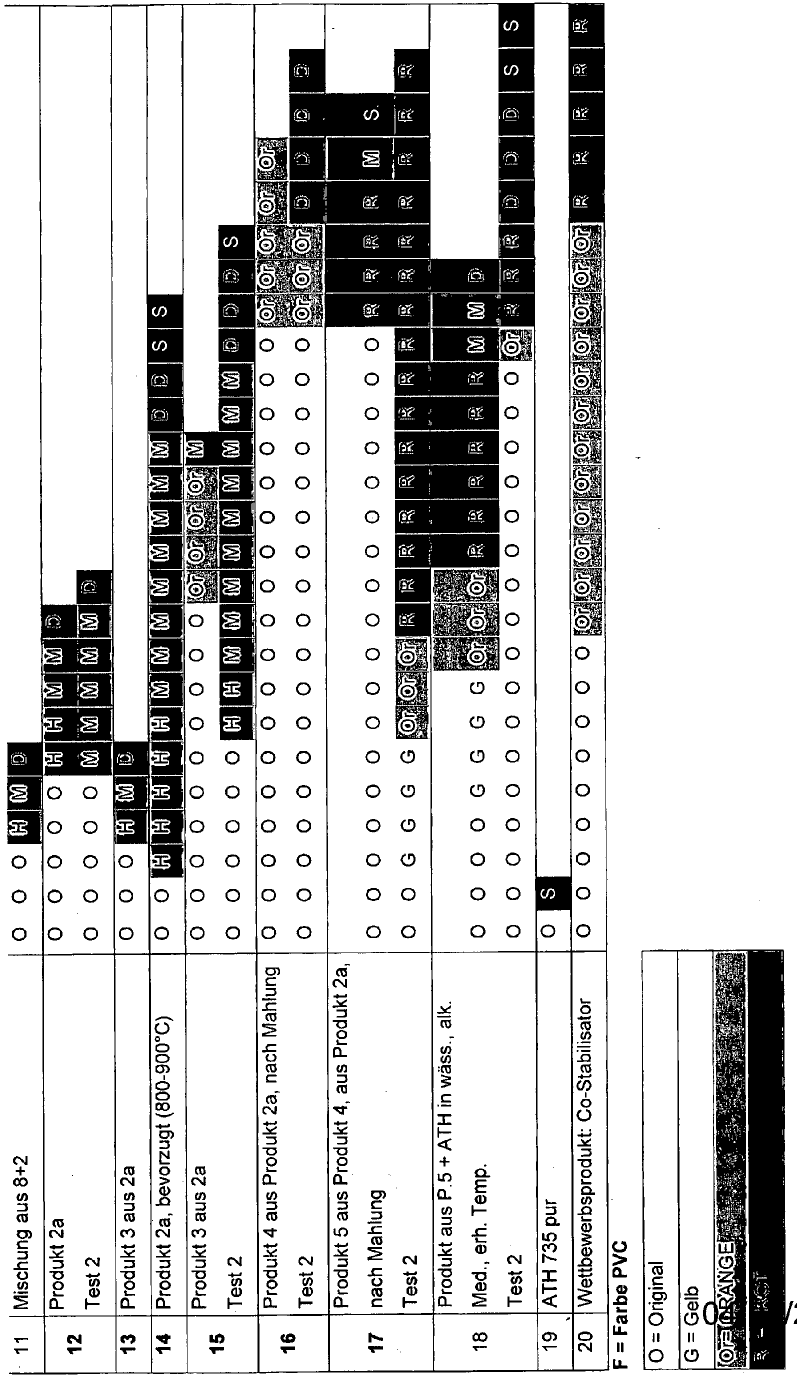

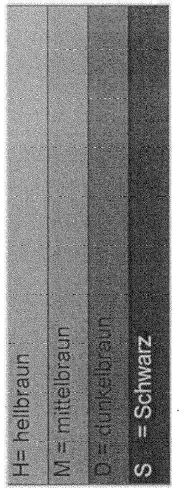

Bezüglich Tabelle 7 kann festgehalten werden, dass Mg(OH)₂, natürlich oder synthetisch (Versuche 1-2-3), MgO und CaCO₃ (Versuche 7 und 8) keine Funktion zeigen, da die Verfärbung nach 4 bis 8 Minuten eintritt.

Natürliches Ca(OH)₂, MgCa(OH)₂, CaO (Versuche 4-5-6) zeigt eine verbesserte Funktion, da hier die Verfärbung nach etwa 30 Minuten bei mindestens einem von zwei parallelen Versuchen eintritt.

Eine Mischung aus CaO und MgO bzw. Mg(OH)₂ und CaCO₃ (Versuche 9 bzw. 11) zeigt keine oder nur eine sehr geringe Verbesserung der Funktionalität der Einzelkomponenten. Lediglich bei einer Mischung aus Ca(OH)₂ und Mg(OH)2 (Versuch 10) kann die Funktionalität der beiden Einzelkomponenten verbessert werden.

Durch Teilkalzinierung und Rehydratisierung (Produkte 2a und 3) eines Mischminerals (Versuche 12 bis 15) entsteht eine Funktionalität, die zwar höher als bei reinen Mg-haltigen Komponenten ist, aber nicht so hoch wie bei der Mischung aus Ca(OH)₂ und Mg(OH)₂.

Wird ein Mischmineral, wie unter Produkt 1 beschrieben, vollkalziniert und vermahlen, verdoppelt sich die Stabilität. Produkt 4 (Versuch 16) hat hiermit die beste Stabilität der getesteten Produkte. Vorteil hierbei ist, dass die Ca- und Mg-haltigen Komponenten nicht vermischt werden müssen, wie in Versuch 10 und somit das Produkt günstig hergestellt werden kann

Der Tabelle 8 kann entnommen werden, dass die günstigen produkte 2 und 3 eine Funktionalität bieten, die höher ist als bei herkömmlich verwendeten Ca- und Mg-haltigen Füllstoffen. Das erfinderische Produkt 4 zeigt hier auch wieder die beste Wirkung.

### Beispiel 4

Im Folgenden wird der Zusatz von Stabilisatormischungen für halogenierte Polymere, z.B. PVC, speziell als Säurefänger, beschrieben, vgl. Tabelle 9.

Dazu werden die Produkte 2c und 4, zusammen mit Zuschlägen und im Vergleich zu marktgängigen Layered Double Hydroxides (LDH, Hydrotalcit) in PVC eingearbeitet und die Wirksamkeit geprüft. Sowohl die Verarbeitungseigenschaften als auch die mechanischen Produkteigenschaften waren dabei zumindest äquivalent zu den bisher eingesetzten Materialien oder besser.

**Tabelle 9.**

| **Bestandteil** | **1** | **2** | **3** | **4** |
|---|---|---|---|---|
| **PVC** | 100 | 100 | 100 | 100 |
| **Zuschlag** | 25 | 25 | 25 | 25 |
| **LDH 1** | 1 | | | |
| **LDH 2** | | 1 | | |
| **Produkt 2c** | | | 1 | |
| **Produkt 4** (erfindungsgemäß) | | | | 1 |
| **Stab.-Zeit (VDE)** | 100 % | -8 % | -20 % | +36 |
| **Stab.-Zeit (DIN 53381)** | 100 % | -5 % | -16 % | +98 |

| | | | | |
|---|---|---|---|---|
| - = kürzere Stabilität + = längere Stabilität | | | | |

Produkt 2c zeigt zwar eine geringere Stabilität gegenüber den LDH-Materialien. 2c ist aber auch deutlich preiswerter. Produkt 4 ist hinsichtlich der stabilisierenden Wirkung deutlich besser als die parallel eingesetzten LDH-Materialien und ist auch aus ökonomischen Gesichtspunkten den LDH-Produkten überlegen.

## Patentansprüche

1. Verwendung einer Stabilisatorzusammensetzung, die frei von Schwermetallen ist, bestehend aus mindestens einer natürlich vorkommenden Erdalkaliverbindung, die als Calcium-Magnesium-Mischverbindung vorliegt, zur Stabilisierung halogenhaltiger Polymere,
**dadurch gekennzeichnet, dass**
die Erdalkaliverbindung eine kalzinierte Erdalkalicarbonatverbindung mit mehr als 50,0 Ma.-% CaO bezogen auf den Ca-Anteil der Calcium-Magnesium-Mischverbindung ist, wobei die Erdalkaliverbindung jeweils mit weniger als 50,0 Ma.-% CaMg(CO₃)₂ in Form submikronskaliger Primärpartikel mit einer Partikelgröße, gemessen als d₅₀ mittels Laserbeugung oder REM oder TEM, die zumindest in einer Dimension 0,1 - 0,3 µm beträgt, vorliegt.

2. Verwendung gemäß Anspruch 1,
**dadurch gekennzeichnet, dass**
die kalzinierte Erdalkaliverbindung weniger als 30,0 Ma.-% CaMg(CO₃)₂, meist bevorzugt weniger als 10,0 Ma.-% CaMg(CO₃)₂ aufweist.

3. Verwendung gemäß einem der Ansprüche 1 - 2,
**dadurch gekennzeichnet, dass**
die kalzinierte Erdalkaliverbindung mehr als 50,0 Ma.-% MgO, bevorzugt mehr als 70,0 Ma.-% MgO, meist bevorzugt mehr als 90,0 Ma.-% MgO, bezogen auf den Mg-Anteil der Calcium-Magnesium-Mischverbindung, aufweist.

4. Verwendung gemäß einem der Ansprüche 1 - 3,
**dadurch gekennzeichnet, dass**
die vollständig kalzinierte Erdalkaliverbindung mehr als 70,0 Ma.-% CaO, bevorzugt mehr als 90,0 Ma.-% CaO, bezogen auf den Ca-Anteil der Calcium-Magnesium-Mischverbindung, aufweist.

5. Verwendung gemäß einem der vorangegangenen Ansprüche,
**dadurch gekennzeichnet, dass**
die Calcium-Magnesium-Mischverbindung einen Weißgrad R 457 nach ISO größer 80 %, bevorzugt größer 84 %, meist bevorzugt größer 88 % aufweist.

6. Verwendung gemäß einem der vorangegangenen Ansprüche,
**dadurch gekennzeichnet, dass**
die Erdalkalicarbonatverbindung bei Temperaturen von 1000°C bis 1200°C kalziniert wurde.

## Claims

1. Use of a stabiliser composition, which is free of heavy metals, consisting of at least one naturally occurring alkaline earth compound, which is present as a calcium-magnesium mixed compound, for stabilising halogen-containing polymers,
**characterised in that**
the alkaline earth compound is a calcined alkaline earth carbonate compound comprising more than 50.0 % by mass CaO based on the Ca portion of the calcium-magnesium mixed compound, the alkaline earth compound being present having, in each case, less than 50.0 % by mass CaMg(CO₃)₂ in the form of submicron-scale primary particles having a particle size, measured as d₅₀ by laser diffraction or REM or TEM, which is 0.1-0.3 µm at least in one dimension.

2. Use according to claim 1,
**characterised in that**
the calcined alkaline earth compound comprises less than 30.0 % by mass CaMg(CO₃)₂, mostly preferably less than 10.0 % by mass CaMg(CO₃)₂.

3. Use according to either claim 1 or claim 2,
**characterised in that**
the calcined alkaline earth compound has more than 50.0 % by mass MgO, preferably more than 70.0 % by mass MgO, mostly preferably more than 90.0 % by mass MgO, based on the Mg portion of the calcium-magnesium mixed compound.

4. Use according to any of claims 1 to 3,
**characterised in that**
the fully calcined alkaline-earth compound has more than 70.0 % of mass CaO, preferably more than 90.0 % of mass CaO, relative to the Ca portion of the calcium-magnesium mixed compound.

5. Use according to any of the preceding claims,
**characterised in that**
the calcium-magnesium mixed compound has a brightness R 457 according to ISO that is greater than 80 %, preferably greater than 84 %, mostly preferably greater than 88 %.

6. Use according to any of the preceding claims,
**characterised in that**
the alkaline earth carbonate compound has been calcined at temperatures of from 1000 °C to 1200 °C.

## Revendications

1. Utilisation d'une composition de stabilisateur, qui est exempte de métaux lourds, constituée d'au moins un composé alcalino-terreux naturel, qui se présente sous la forme d'un composé mixte de calcium et de magnésium, pour la stabilisation de polymères halogénés,
**caractérisée en ce que**
le composé alcalino-terreux est un composé de carbonate alcalino-terreux calciné contenant plus de 50,0 % en masse de CaO par rapport à la proportion de Ca du composé mixte de calcium et de magnésium, le composé alcalino-terreux se présentant à chaque fois avec moins de 50,0 % en masse de CaMg(CO₃)₂ sous la forme de particules primaires submicroniques ayant une taille de particule, mesurée en tant que d₅₀ par diffraction laser ou MER ou MET, qui est de 0,1 à 0,3 µm dans au moins une dimension.

2. Utilisation selon la revendication 1, **caractérisée en ce que** le composé alcalino-terreux calciné comprend moins de 30,0 % en masse de CaMg(CO₃)₂, de manière préférée entre toutes moins de 10,0 % en masse de CaMg(CO₃)₂.

3. Utilisation selon l'une quelconque des revendications 1 à 2, **caractérisée en ce que** le composé alcalino-terreux calciné comprend plus de 50,0 % en masse de MgO, de préférence plus de 70,0 % en masse de MgO, de manière préférée entre toutes plus de 90,0 % en masse de MgO, par rapport à la proportion de Mg du composé mixte de calcium et de magnésium.

4. Utilisation selon l'une quelconque des revendications 1 à 3, **caractérisée en ce que** le composé alcalino-terreux entièrement calciné comprend plus de 70,0 % en masse de CaO, de préférence plus de 90,0 % en masse de CaO, par rapport à la proportion de Ca du composé mixte de calcium et de magnésium.

5. Utilisation selon l'une quelconque des revendications précédentes, **caractérisée en ce que** le composé mixte de calcium et de magnésium présente un degré de blancheur R 457 selon ISO supérieur à 80 %, de préférence supérieur à 84 %, de manière préférée entre toutes supérieur à 88 %.

6. Utilisation selon l'une quelconque des revendications précédentes, **caractérisée en ce que** le composé de carbonate alcalino-terreux a été calciné à des températures de 1 000 °C à 1 200 °C.
